Europäisches Patentamt

European Patent Office

Office européen des brevets

(19)

(11) Publication number: **0 115 294**
**A2**

(12) # EUROPEAN PATENT APPLICATION

(21) Application number: **84100478.1**

(22) Date of filing: **18.01.84**

(51) Int. Cl.³: **G 01 N 21/25**
**//H05B33/12**

(30) Priority: **27.01.83 US 461508**

(43) Date of publication of application:
**08.08.84 Bulletin 84/32**

(84) Designated Contracting States:
**DE FR GB IT SE**

(71) Applicant: **MILES LABORATORIES, INC.**
**1127 Myrtle Street**
**Elkhart Indiana 46514(US)**

(72) Inventor: **Kramer, Donald L.**
**28622 Country Road 38 P.O. Box 606**
**Wakarusa Indiana 46573(US)**

(74) Representative: **Jesse, Ralf-Rüdiger, Dr. et al,**
**Bayer AG Konzernverwaltung RP Patentabteilung**
**D-5090 Leverkusen 1 Bayerwerk(DE)**

(54) **Photometric device.**

(57) Apparatus is disclosed for measuring light intensities involving one or more light source and a detector in which the light source is an electroluminescent lamp composed of a capacitor having two conducting layers with an intermediate dielectric layer.

EP 0 115 294 A2

## PHOTOMETRIC DEVICE

*Field of the Invention*

The present invention relates to an instrument capable of making reflectance and/or transmittance measurements. More particularly, the present invention is directed to an improved photometric device which is especially useful in measuring color values of analytical test devices.

*Background of the Invention*

The determination of reflectance or transmittance values by measuring the amount of light reflected from a colored surface or light transmitted through a fluid are well known. Illumination is provided by at least one light source and detected by suitable means, such as photoelectric cells. Such prior art devices, however, have several disadvantages when attempts are made to use the devices for the measurement of color values of analytical test devices, such as bibulous carriers impregnated with chemical reagents.

Conventionally, the intensity of the reflected light is measured using an incandescent lamp, flashlamp, or light emitting diode (LED) as an illumination source. Some type of optical wavelength selection is often necessary when making these measurements. To provide accurate results due to variations found in most light sources filters have been considered

MS-1272

essential to compensate for the inability of light sources to provide uniform wavelength illumination. Typically this involves placing a filter in the reflected light beam if the sample is illuminated with white light or using the semimonochromatic emission of a LED. Lamps and flashlamps emit light in a broad spectrum and most of the light (greater than 98 percent) is not used. LEDs, on the other hand, emit light at certain wavelengths. These wavelengths, however, generally are not ideal for color measurements made in connection with test devices. Another problem with conventional light sources is that test devices should be illuminated diffusely. Current light sources are quasi-point sources which often require use of additional devices such as integrating spheres to diffuse light before it reaches the specimen to be measured.

One of the disadvantages of such photometric devices is the time and care required for making adjustments required to compensate for variations which occur with time and temperature. Variations can even occur due to fluctuations in the power input (voltage and/or current) to the light source. Despite power adjustments errors in the calibration of instruments occur as a function of short term changes in light output from the light source or short term changes in the sensitivity of photoelectric cells. Repeated recalibration is not only an inconvenience, but it can introduce measurement errors if the calibration is not performed accurately by skilled personnel.

Another major disadvantage of prior art instrumentation is the amount of heat generated by the light source and, concomitantly, the amount of power required for the light source. The utilization of heat filters to protect samples does not completely obviate this problem. Such heat filters do not minimize power requirements and they result in a reduction of light intensity which can be effectively utilized. The substitution of a shutter arrangement to permit the utilization of full light intensity has been suggested, but this does not minimize the power requirements.

Another common drawback of prior art devices has been the rather substantial size and weight of such devices. Due to their size, complexity and the necessity of adapting the equipment for the regulation of heat generated during use, prior art photometric devices tend to be expensive.

*Summary of the Invention*

An object of the present invention is to provide an improved device for measuring light intensities.

Another object of the present invention is to provide a relatively inexpensive device for measuring light intensities.

Still another object of the present invention is to provide a spectrophotometer having a cool light source of constant light intensity and uniform wavelength.

Yet another object of the present invention is to provide a device for measuring light intensities which can be utilized without requiring calibration by a highly skilled operator.

A further object of the present invention is to provide a relatively compact portable instrument for measuring light intensities.

Yet another object of the present invention is to provide a photometric device for measuring light intensities which has low power consumption.

In accordance with the present invention, a photometric device for measuring light intensity is provided comprising one or more electroluminescent lamps and at least one detector in which each electro-

MS-1272

luminescent lamp consists of a capacitor having two conducting surfaces with an intermediate dielectric. These photometric devices are capable of operating on low power inputs and require no filters since constant uniform wavelength illumination is provided.

*Brief Description of the Drawings*

Other and further objects, advantages and features of the invention will be apparent to those skilled in the art from the following detailed description, thereof, taken in conjunction with the accompanying drawings in which:

Fig. 1 is a schematic view, of an electroluminescent device which can be used in accordance with the present invention;

Fig. 2 is a schematic perspective view, partially broken away, of multiple electroluminescent devices used in conjunction with photodetection means to measure light intensity reflected from colored surfaces illuminated by electroluminescent light sources; and

Fig. 3 is a spectrophotometer in accordance with the present invention used for transmittance measurements.

*Description of the Preferred Embodiments*

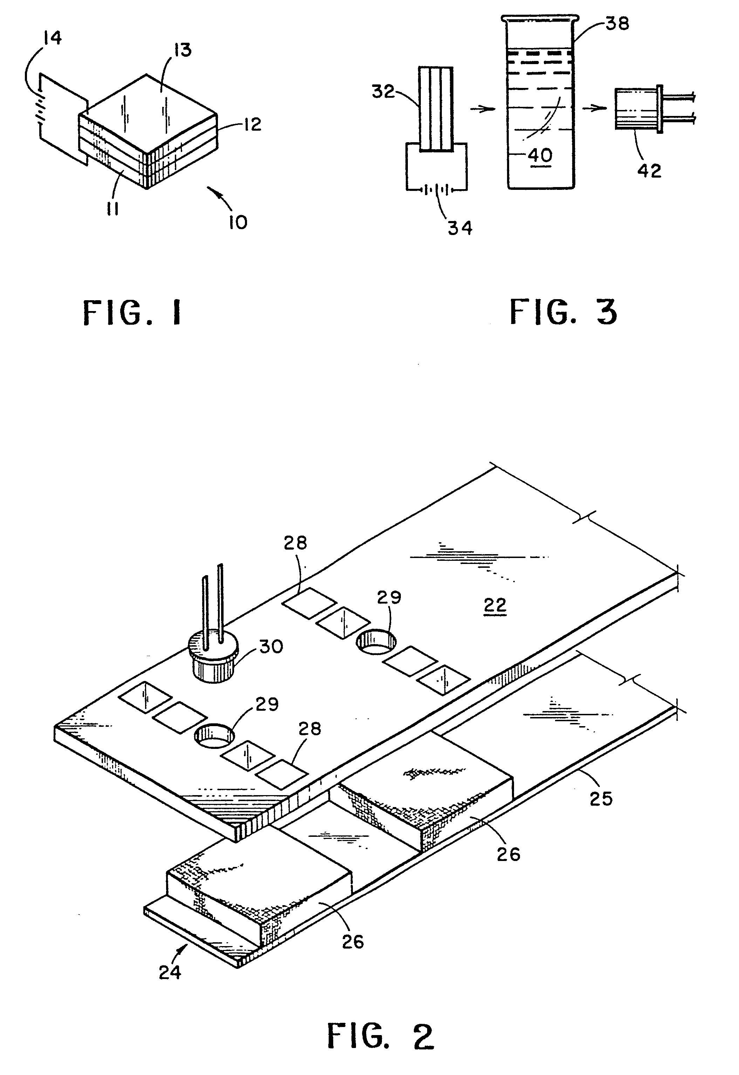

Referring now to the drawings, a electroluminescent photometric device in accordance with the present invention employs an electroluminescent light source consisting of two planar electrodes separated by a dielectric. As seen in Fig. 1, electroluminescent device 10 comprises a metal support electrode 11, a dielectric consisting of several layers of electroluminescent material incorporated in a ceramic structure 12, and a transparent conductive layer 13 which

MS-1272

is normally protected by a vitrified surface and electrically insulated. Uniform light radiation is emitted across the entire active surface layer 13 by applying voltage from source 14 to electrode 11 and layer 13. Thus, the electroluminescent lamp or device 10 is a capacitor having two conducting surfaces with a dielectric or insulator between. The resulting device is an intrinsic or "sandwich" type electroluminescent device. Because the electroluminescent light sources of the present invention are AC devices, AC power is required or inverters are necessary with the use of DC power sources. The brightness of the electroluminescent light sources can be varied by changing the voltage or frequency applied to the light sources.

The electroluminescent light sources can be sealed in the sandwich type construction by using suitable rigid thermoplastic materials, such as acrylonitrile-butadiene-styrene copolymers, acrylic polymers, polycarbonate, etc. Encapsulated or sealed in such plastic materials results in a very rugged, durable light source which can withstand severe physical, electro and environmental conditions.

Luminous colors can be obtained in two ways. The intrinsic spectral emission characteristics of a single electroluminescent phosphor or combinations of two or more phosphors can be used in a blend to provide a color. Alternatively, an electroluminescent phosphor can be used in conjunction with a photoluminescent dye or overlay. Adsorption filtering, the least efficient process, normally does not have to be used.

Luminescent pigment is commonly dispersed within the insulator or dielectric. Just as current is induced into the secondary windings of a transformer by changing the magnetic field, so by analogy, current

MS-1272

flows within the semiconducting, heterogenous phosphor particles embedded in the insulator due to the changing electric field. The induced current gives rise to "luminescence", a term employed to describe the phenomena of light emission not due to the temperature of the source. Full brightness can be obtained as soon as the electroluminescent light sources are turned on. When turned off the electroluminescent lamps exhibit negligible phosphofluorescent "afterglow".

With their unique attributes of extreme lightweight and thinness and the variety and complexity of possible shapes and sizes, electroluminescent lights with controllable brightness and uniform wavelength are especially suitable for use in accordance with the present invention for measuring light intensities. Electroluminescent light sources are "cold" light sources, operating close to ambient temperature. These light sources withstand shock and vibration as well as thermal cycling. Significantly, the light sources have no noticeable color shift with frequencies and, unlike incandescent lighting, electroluminescent light sources do not change color when voltage is reduced. Due to the efficiency of the electroluminescent light sources, use of integrating spheres is unnecessary.

Suitable electroluminescent light sources are available from Luminescent Systems, Inc. (LSI), Lebanon, New Hampshire. LSI's red phosphor color is particularly suited for systems measuring light intensities associated with the detection of pH, protein and occult blood. LSI's blue green phosphor color is especially suited for systems measuring light intensities associated with the detection of glucose. LSI's yellow green phosphor color can be used for systems measuring light intensities associated with

MS- 1272

ketone, bilirubin and nitrite. LSI's aviation green phosphor color is suited for use in systems measuring light intensities associated with urobilinogen. LSI's blue phosphor color is especially suited for systems measuring light intensities associated with specific gravity. The nominal characteristics of these colors is set forth below where Hz is hertz, ft. L is foot lumen, WATTS/ft$^2$ is watts per square foot and nm is nanometers.

LSI STANDARD COLORS - NOMINAL CHARACTERISTICS

| Color | Frequency (Hz) | Luminance (ft. L) | Radiance (WATTS/ft$^2$) | Spectral Peak Emission (nm) | Chromaticity x | y |
|---|---|---|---|---|---|---|
| Blue Green | 60 | 4 | .010 | 515 | .200 | .500 |
| | 400 | 20 | .062 | 505 | .185 | .420 |
| Aviation Green | 60 | 4 | .009 | 530 | .250 | .550 |
| | 400 | 20 | .051 | 520 | .230 | .500 |
| Yellow Green | 400 | 18 | .036 | 540 | .375 | .575 |
| Blue | 60 | 2 | .012 | 470 | .175 | .215 |
| Red | 400 | 4 | .019 | 620 | .666 | .333 |

It will be understood that other colors can be used if desired and that phosphor colors from companies other than LSI can be employed.

As seen in Fig. 2, the electroluminescent lights, such as those of Fig. 1, can be incorporated into a panel 22 which is suitably suspended over a reagent test device 24 comprising substrate 25. Reagent test device 24 typically comprises one or more carrier matrixes 26, such as adsorbent paper, having incorporated therewith a particular reagent or reactive system which manifests a color change in the presence of a specific sample component, attached to substrate 25, e.g., polystyrene. Depending on the reactant system incorporated with a particular matrix, these test devices can detect the presence of glucose, ketone bodies, bilirubin, urobilinogen, occult blood, nitrite and other substances in body fluids, such as urine or blood. A specific color or change in the intensity of a color observed within a specific time range after contacting the test device with the sample is indicative of the presence of a particular component and its concentration in the sample.

Representative test devices and their reactive systems are set forth in U.S. Patent Nos. 3,123,443; 3,212,855; 3,184,668; 3,164,534; 3,298,789; etc. Although such test devices can be utilized in many analytical applications, they are especially useful, as indicated above, in the chemical analysis of biological fluids because of their relative low cost, ease of usability and speed in obtaining desired results. Numerous physiological functions can be monitored merely by dipping the reagent test device into a sample of body fluid and observing a detectable response, such as a color change or a change in the amount of light reflected from or absorbed by the test device. Such test devices produce a detectable result

MS-1272

which is at least semiquantative, if not quantative. Thus, by measuring the response after a predetermined time, the analysts can obtain not only a positive indication of the presence of a particular constituent in a test sample, but also an estimate of how much of the constituent is present.

By having multiple electroluminescent lights 28-28 suspended over test device 24, it is possible to illuminate each of the reagent matrixes 26 with one or more wavelengths and obtain light reflected from matrixes 26 through openings 29-29 in substrate 22. The reflected light can be measured by suitable means, such as photodetector 30. Multiple photodetector means can be employed or relative movement of photodetector 30, substrate 22 and test device 24 can be effected in order that only one photodetector is required for multiple readings. If desired the light detection means can also be incorporated in substrate 22. Obviously, the flexibility offered by electroluminescent light sources 28-28 permits many different configurations.

For test devices such as test device 24, reflectance measurements will normally be made at a wavelength of from about 300 nanometers to about 725 (nm) nanometers. For transmission measurements, such as that illustrated schematically in Fig. 3, wavelengths from about 250 to about 800 nm are normally employed.

In the embodiment illustrated in Fig. 3 electroluminescent light source 32, powered by power source 34, passes light of a given wavelength through a cuvette 38 containing liquid 40. The light transmitted is measured by photodiode 42.

Cuvette 38 can be made of any suitable material, such as glass, quartz or plastic, which will minimize interference with light passing along a light transmission path from the electroluminescent light source

MS-1272

32 to photodiode 42. Cuvette 38 is adapted to accommodate liquid sample 40 of a medium whose transmittance is to be measured.

The photo detection means employed for measuring light intensity is not critical and any suitable detection means can be employed. Suitable photodetection means include solid state photodiodes such as Model UV100B made by E. G. & G., Inc. of Salem, Massachusetts and Model S876-33BQ made by Hemamatsu Corporation, Middlesex, New Jersey, USA.

From the foregoing, it will be seen that this invention is adapted to attain all of the ends and objects hereinabove set forth together with other advantages which are obvious and inherent. The apparatus can be adapted for either reflectance or transmittance measurements and the apparatus has the advantage of being made into very compact size, requiring low power, and having uniform intensity and wavelength. Due to the construction of these electroluminescent light sources, the need for sockets, bulbs, diffusers, reflectors, etc. is eliminated. The light sources provide uniform lighting across the entire luminescent surface. Moreover, the lamps are a cold light source. Another advantage is that the electroluminescent light sources are fully compatible with printed circuit (PC) boards and can be adapted to many different configurations. Accuracy of the apparatus for measuring light intensities is very high and the apparatus can be operated by relatively unskilled personnel because of the unique construction of the apparatus and the minimum calibration required. In addition, minimal exposure of photosensitive samples is accomplished and ambient temperature conditions can be used. If desired, the apparatus of the present invention can also be used to measure fluorescence. The resultant apparatus can thus be

MS-1272

made as a convenient, lightweight, portable readily adaptable and relatively inexpensive unit.

Obviously, many modifications and variations of the invention as set forth herein can be made without departing from the spirit and scope thereof and therefore, only such limitations should be imposed as are indicated by the appended claims.

MS-1272

WHAT IS CLAIMED IS:

1.    Apparatus for measuring light intensities having at least one light source and detector, characterized in that each light source is an electroluminescent lamp comprising a capacitor having two conducting layers with an intermediate dielectric layer.

2.    The apparatus of claim 1 in which the electroluminescent lamp provides intrinsic spectral emission by employing a single electroluminescent phosphor.

3.    The apparatus of claim 1 in which the electroluminescent lamp provides intrinsic spectral emission by employing multiple electroluminescent phosphors.

4.    The apparatus of claim 1 in which a single electroluminescent lamp is employed.

5.    The apparatus of claim 1 in which multiple electroluminescent lamps are employed wherein each electroluminescent lamp provides a different spectral peak emission.

6.       Process of determining the amount of light reflected from a colored surface by illuminating said surface with at least one electroluminescent lamp comprising a capacitor having two conducting layers with an intermediate dielectric layer and measuring the light reflected from said surface.

0115294

7.      Process of claim 6 wherein each electroluminescent lamp provides a different spectral peak
emission.

8.      Process of determining the amount of light
transmitted through a fluid comprising:
       illuminating said fluid from one direction employing at least one electroluminescent lamp comprising a capacitor having two conducting layers with an
intermediate dielectric layer, and
       measuring light transmitted through the fluid.

9.      Process  of claim 8 wherein each electroluminescent lamp provides a different spectral peak
emission.

MS-1272

FIG. 1

FIG. 3

FIG. 2